Europäisches Patentamt

European Patent Office

Office européen des brevets

(19)

(11) Numéro de publication : **0 187 729**
**B1**

(12) **FASCICULE DE BREVET EUROPÉEN**

(45) Date de publication du fascicule du brevet :
28.03.90

(51) Int. Cl.⁵ : **F 16 K   5/06**, F 16 K   5/20

(21) Numéro de dépôt : **86400045.0**

(22) Date de dépôt : **10.01.86**

(54) **Vanne à obturateur sphérique.**

(30) Priorité : 11.01.85 FR 8500387

(43) Date de publication de la demande :
16.07.86 Bulletin 86/29

(45) Mention de la délivrance du brevet :
28.03.90 Bulletin 90/13

(84) Etats contractants désignés :
BE CH DE GB IT LI NL SE

(56) Documents cités :
FR--A-- 2 202 572
FR--A-- 2 330 932
US--A-- 3 245 653
US--A-- 4 332 267

(73) Titulaire : SOCIETE EUROPEENNE DE PROPULSION
(S.E.P.) Société Anonyme dite:
24 Rue Salomon de Rothschild
F-92150 Suresnes (FR)

(72) Inventeur : Garceau, Patrick
20 rue du Bourgage St Pierre d'Autils
F-27950 St Marcel (FR)
Inventeur : Lhuillery, Patrick
8 résidence La Braye Les Rotoirs
F-27600 St Aubin/Gaillon (FR)
Inventeur : Dumont, Paul
34 rue Pierre Le Tellier
F-27200 Vernon (FR)

(74) Mandataire : Thévenet, Jean-Bruno et al
Cabinet BEAU DE LOMENIE 55 rue d'Amsterdam
F-75008 Paris (FR)

EP 0 187 729 B1

## Description

La présente invention a pour objet une vanne à obturateur sphérique, comprenant un corps de vanne définissant une section de conduit amont et une section de conduit aval, un obturateur sphérique présentant une ouverture calibrée, des moyens d'entraînement en rotation de l'obturateur sphérique pour faire passer celui-ci d'une position de fermeture à une position d'ouverture et vice versa, une came solidaire des moyens d'entraînement en rotation de l'obturateur et des moyens d'étanchéité pour assurer une étanchéité en position fermée de l'obturateur, les moyens d'étanchéité étant montés dans le corps de vanne de manière à pouvoir passer d'une position de retrait dans laquelle les moyens d'étanchéité sont écartés de l'obturateur sphérique à une position de contact dans laquelle les moyens d'étanchéité sont en contact avec l'obturateur pour assurer une étanchéité entre le corps de vanne et l'obturateur, les moyens d'étanchéité étant normalement soumis à une action tendant à les placer en position de contact avec l'obturateur.

Les vannes de laminage à obturateur sphérique connues comprennent un joint d'étanchéité qui coopère en permanence avec l'obturateur sphérique quelle que soit la position de la vanne. Ce joint est ainsi sollicité en permanence et tend à présenter une durée de vie limitée. L'action de contact du joint sur l'obturateur affecte en outre la précision de la manœuvre de la vanne.

On connaît par ailleurs, notamment par le document US-A-3 245 653, des vannes à boisseau sphérique dans lesquelles l'obturateur coopère avec un joint à rétraction directe. Dans ce cas, l'effort de rétraction du joint est fourni directement par un galet excentrique monté sur la tige du boisseau. Le moyen de rétraction de joint reste ainsi en permanence en contact avec d'une part la tige du boisseau et, d'autre part, le support de joint pour éloigner celui-ci dans la position d'ouverture de la vanne. Dans ce cas, tous les efforts dûs aux frottements dans le mécanisme de commande de la rotation de la tige du boisseau sont transmis au support de joint, de sorte qu'une telle vanne ne peut pas permettre de positionner de façon précise le boisseau en position ouverte et donc ne peut être utilisée en tant que vanne de régulation destinée à commander le débit d'un fluide.

Aussi, l'invention vise à remédier aux inconvénients précités et à réaliser une vanne à obturateur sphérique qui présente à la fois une meilleure aptitude à la régulation, par élimination des efforts provenant des actions de contact joint-obturateur, une durée de vie accrue et des performances en étanchéité améliorées.

Ces buts sont atteints grâce à une vanne à obturateur sphérique du type mentionné en tête de la description, qui, conformément à l'invention, est caractérisée en ce qu'elle comprend en outre des moyens de rétraction de joint comprenant au moins un poussoir distinct de la came et coopérant avec au moins un élément élastique de stockage d'énergie pour être mis sélectivement en contact avec la came et les moyens d'étanchéité, et en ce que lorsque l'obturateur est déplacé de sa position d'ouverture à sa position de fermeture, la came vient en contact avec les moyens de rétraction de joint pour écarter ceux-ci des moyens d'étanchéité et comprimer l'élément de stockage d'énergie et les moyens d'étanchéité viennent en contact avec l'obturateur tandis que lorsque l'obturateur est déplacé de sa position de fermeture à sa position d'ouverture, la came perd son contact avec les moyens de rétraction de joint qui sont déplacés par l'élément de stockage d'énergie pour venir en contact avec les moyens d'étanchéité et faire passer ceux-ci de leur position de contact avec l'obturateur à leur position de non contact avec l'obturateur.

Selon une caractéristique particulière, les moyens d'étanchéité comprennent un joint d'étanchéité monté sur un support relié au corps de vanne par un soufflet élastique d'étanchéité comprimable dans le sens longitudinal des conduits amont et aval.

Les moyens d'étanchéité sont disposés dans une cavité annulaire du corps de vanne coaxiale à l'un des conduits amont et aval.

Des moyens élastiques supplémentaires formant amortisseurs peuvent être prévus pour coopérer avec le support de joint pour appliquer celui-ci contre l'obturateur en position fermée.

Selon un premier mode de réalisation, les moyens de rétraction de joint comprennent un galet associé à chaque poussoir et disposé sur une portée excentrée formant came solidaire des moyens d'entraînement en rotation de l'obturateur, et le galet coopère avec le poussoir pour empêcher celui-ci de venir en contact avec le support de joint lors de la fermeture de l'obturateur.

Selon un autre mode de réalisation, les moyens de rétraction de joint comprennent un galet monté dans chaque poussoir et la came solidaire des moyens d'entraînement en rotation de l'obturateur vient en prise avec le galet montés sur le poussoir pour empêcher celui-ci de venir en contact avec le support de joint lors de la fermeture de l'obturateur.

Avantageusement, les moyens de rétraction de joint sont symétriques par rapport à un plan axial de la vanne perpendiculaire à l'axe de rotation de l'obturateur.

Le dispositif de rétraction de joint selon l'invention ne présente aucune pièce constitutive interférant avec l'écoulement principal de la vanne, de sorte que sa mise en place n'altère pas le coefficient de débit de la vanne.

D'autres caractéristiques et avantages de l'invention ressortiront de la description suivante de modes particuliers de réalisation, en référence au dessin annexé, sur lequel :

la figure 1 représente une vue schématique en coupe axiale d'un premier mode de réalisation d'une vanne à obturation sphérique selon l'invention,

la figure 2 est une vue en demi-coupe axiale selon la ligne II-II de la figure 1, et

la figure 3 représente une vue schématique en coupe axiale d'un second mode de réalisation d'une vanne à obturateur sphérique selon l'invention.

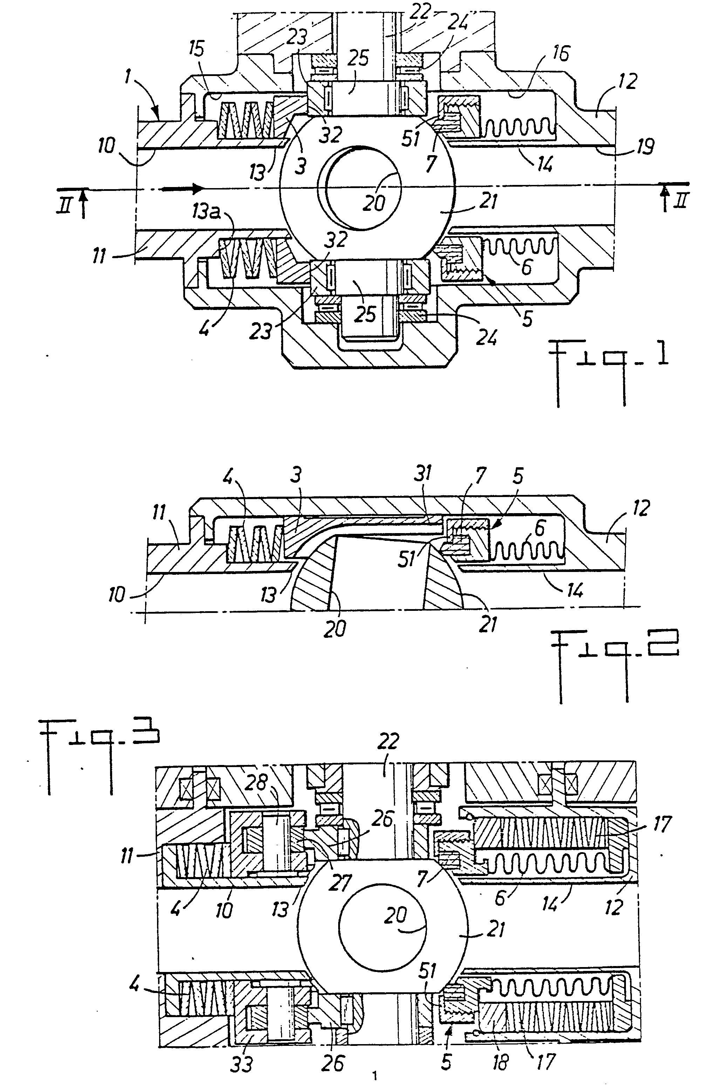

On voit sur la figure 1 un premier exemple de réalisation d'une vanne à obturateur sphérique conforme à l'invention, comprenant un corps de vanne 1 avec une première partie 11 définissant un conduit amont 10 et une deuxième partie 12 définissant un conduit aval 19. Un obturateur 2 solidaire d'un arbre d'entraînement 22 comprend une pièce sphérique 21 interposée entre les conduits amont 10 et aval 19 pour assurer, dans une position de fermeture ou quasi-fermeture représentée sur les figures 1 et 2, une interruption de la communication entre les conduits aval et amont 10, 19. Par rotation de la tige de commande 22, l'obturateur sphérique 21 peut être amené dans une position d'ouverture dans laquelle un orifice central calibré 20 assure une communication entre les conduits amont et aval 10, 19. La tige de commande 22 est montée dans le corps de vanne 1 au moyen de roulements 24.

La deuxième partie 12 du corps de vanne 1 présente une paroi cylindrique 14 qui forme une séparation entre le conduit aval 19 et une cavité annulaire 16 coaxiale au conduit aval 19, dans laquelle sont disposés un support de joint 5 et un soufflet élastique 6 reliant le support de joint 5 au fond de la cavité 16 de la deuxième partie 12 du corps de vanne 1. Le soufflet élastique 6 est coaxial au conduit aval 19 et peut être comprimé dans le sens longitudinal lorsque le support de joint 5 est repoussé vers le fond de la cavité 16. Un joint annulaire 7 disposé dans le support de joint 5 porte sur l'obturateur sphérique 21 et forme un nez d'étanchéité assurant, en position fermée de la vanne l'étanchéité entre le corps de vanne 1 et l'obturateur 21, du côté aval, en combinaison avec le soufflet élastique 6.

La mise en œuvre d'un soufflet élastique 6 reliant le support de joint 5 au corps de vanne 1 permet de provoquer la rétraction du joint 7 dans la plage utile de fonctionnement de la vanne, et par là-même de supprimer tout contact entre l'obturateur 2 et le joint 7. Cette rétraction de l'ensemble du support 5 est réalisée à l'aide d'un mécanisme actionné automatiquement lors de la commande de la vanne.

Selon le mode de réalisation de la figure 1, la rétraction du joint 7 est commandée lors de la rotation de l'obturateur 2 par l'intermédiaire d'un mécanisme came-poussoir 25, 3 coopérant avec un organe accumulateur d'énergie 4.

La première partie 11 du corps de vanne 1 présente une paroi cylindrique 13 qui se termine au voisinage de l'obturateur 2 et forme une séparation entre le conduit amont 10 et une cavité annulaire 15 coaxiale au conduit amont 10. Des séries de rondelles élastiques 4 sont disposées dans la cavité annulaire 15 entre une butée fixe 13a formée à l'arrière de la paroi cylindrique 13 et le talon annulaire d'un poussoir 3.

Le poussoir 3 présente deux surfaces de contact 32 qui sont situées de part et d'autre de la pièce d'obturation 21, du côté de l'amont par rapport à celle-ci, et coopèrent avec des galets 23 montés sur des portées excentrées 25 solidaires de l'arbre 22 d'entraînement en rotation de l'obturateur 2. Le poussoir 3 présente par ailleurs au moins une partie allongée 31 de section réduite qui se prolonge, en position fermée de la vanne, jusqu'au voisinage de la face avant 51 du support de joint 5 située au voisinage du joint d'étanchéité 7, mais à l'extérieur de celui-ci par rapport au conduit aval 19.

Dans la position de quasi-fermeture de la vanne représentée sur les figures 1 et 2, les portées excentrées 25 mettent en contact les galets 23 avec les surfaces 32 du poussoir 3 qui est maintenu dans une position de retrait dans laquelle le talon annulaire comprime les rondelles élastiques 4 placées entre le talon du poussoir 3 et la butée 13a du corps de vanne. Dans cette position l'extrémité avant de la partie allongée 31 du poussoir 3 n'est pas en contact avec le nez d'étanchéité 5 et le joint d'étanchéité 7 vient porter contre l'obturateur sphérique 21 sous l'action du soufflet élastique 6.

Lorsque la vanne est placée en position d'ouverture par rotation de l'axe 22 d'entraînement en rotation de l'obturateur 2, les portées excentrées 25 viennent se positionner de telle sorte que les galets 23 ne sont plus en contact avec les surfaces 32 du poussoir 3 qui leur font face. Sous l'action de l'énergie emmagasinée par les rondelles élastiques 4, le poussoir 3 est déplacé latéralement vers la droite sur les figures 1 et 2. L'extrémité libre de la partie allongée 31 vient alors porter sur la face avant 51 du nez d'étanchéité 5 repoussant ainsi celui-ci vers la droite en comprimant le soufflet élastique 6 et en supprimant le contact entre le joint d'étanchéité 7 et l'obturateur 2. En position d'ouverture de la vanne, dans la zone de fonctionnement, le joint 7 est donc dégagé de l'obturateur tandis que le contact entre l'ensemble came 25- galet 23 et le poussoir 4 est supprimé.

On notera que le profil des surfaces 32 et des cames 25 est tel que le point de décollement du joint 7 est précédé d'une phase de glissement joint-obturateur sur une zone angulaire suffisamment faible pour éviter tout risque de passage du joint sur l'orifice 20 de l'obturateur 2.

Lors de la fermeture de la vanne, les galets viennent de nouveau porter sur les surfaces profilées 32 du poussoir 3 pour repousser le poussoir 3 vers la gauche des figures 1 et 2, recomprimer ainsi les rondelles élastiques 4 et libérer l'ensemble porte-joint 5 qui, sous l'action du soufflet élastique 6 réapplique le joint 7 sur l'obturateur 2.

La figure 3 représente une variante de réalisation dans laquelle le mécanisme provoquant la rétraction de joint comprend des cames 26 qui jouent le rôle des portées excentrées 25 de la figure 1 mais coopèrent avec des galets 27 qui sont intégrés dans un poussoir 33 qui, hormis le fait qu'il incorpore les galets 27 peut être analogue au poussoir des figures 1 et 2, notamment en ce qui concerne sa partie allongée 31. Les galets 27 montés sur des axes 28 définissent des surfaces qui jouent le rôle des surfaces 32 de la figure 1 et coopèrent avec les cames 26 en position de fermeture de la vanne, telle que représentée sur la figure 3.

Les autres éléments de la figure 3 sont semblables à ceux du mode de réalisation de la figure 1 si ce n'est qu'une butée de rétraction 17 incorporant des éléments élastiques est disposée à l'arrière du support de joint 5 pour, d'une part, contribuer à appliquer le joint 7 contre l'obturateur 2 en position de fermeture et, d'autre part, en position d'ouverture, amortir des mouvements d'oscillations éventuels de l'ensemble porte-joint 5.

La vanne à rétraction de joint selon l'invention est particulièrement adaptée à une fonction de régulation dans la mesure où, en position d'ouverture, aucun effort parasite ne s'exerce sur l'obturateur ou la tige de commande de l'obturateur. Il est ainsi possible d'ajuster la position de l'obturateur avec un couple réduit et une grande précision sans usure de joints.

La description qui précède a été faite en référence aux figures 1 à 3, sur lesquelles, pour la clarté des explications, on a défini des conduits amont 10 et aval 19, et le joint d'étanchéité 7 a été disposé du côté aval par rapport à l'obturateur sphérique 21. L'invention s'applique cependant de la même manière à des vannes telles que celles représentées sur les figures 1 à 3 pour lesquelles le sens d'écoulement du fluide serait inversé, c'est-à-dire pour lesquelles les conduits 10 et 19 représenteraient respectivement les conduits aval et amont et le joint d'étanchéité 7 serait alors disposé du côté amont par rapport à l'obturateur sphérique 21.

## Revendications

1. Vanne à obturateur sphérique, comprenant un corps de vanne (1) définissant une section de conduit amont (10) et une section de conduit aval (19), un obturateur sphérique (21) présentant une ouverture calibrée (20), des moyens (22) d'entraînement en rotation de l'obturateur sphérique (21) pour faire passer celui-ci d'une position de fermeture à une position d'ouverture et vice versa, une came (25 ; 26) solidaire des moyens (22) d'entraînement en rotation de l'obturateur (21) et des moyens d'étanchéité (6, 7) pour assurer une étanchéité en position fermée de l'obturateur (21), les moyens d'étanchéité (6, 7) étant montés dans le corps de vanne (1) de manière à pouvoir passer d'une position de retrait dans laquelle les moyens d'étanchéité (6, 7) sont écartés de l'obturateur sphérique (21) à une position de contact dans laquelle les moyens d'étanchéité (6, 7) sont en contact avec l'obturateur (21) pour assurer une étanchéité entre le corps de vanne (1) et l'obturateur (21) les moyens d'étanchéité (6, 7) étant normalement soumis à une action tendant à les placer en position de contact avec l'obturateur (21), caractérisée en ce qu'elle comprend en outre des moyens (23, 3 ; 27, 33) de rétraction de joint comprenant au moins un poussoir (3 ; 35) distinct de la came (25, 26) et coopérant avec au moins un élément élastique (4) de stockage d'énergie pour être mis sélectivement en contact avec la came (25 ; 26) et les moyens d'étanchéité (6, 7), et en ce que lorsque l'obturateur (21) est déplacé de sa position d'ouverture à sa position de fermeture, la came (25 ; 26) vient en contact avec les moyens de rétraction de joint (23, 3 ; 27, 33) pour écarter ceux-ci des moyens d'étanchéité (6, 7) et comprimer l'élément (4) de stockage d'énergie et les moyens d'étanchéité (6, 7) viennent en contact avec l'obturateur (21) tandis que lorsque l'obturateur (21) est déplacé de sa position de fermeture à sa position d'ouverture, la came (25, 26) perd son contact avec les moyens de rétraction de joint (3 ; 33) qui sont déplacés par l'élément (4) de stockage d'énergie pour venir en contact avec les moyens d'étanchéité (7) et faire passer ceux-ci de leur position de contact avec l'obturateur (21) à leur position de non contact avec l'obturateur (21).

2. Vanne selon la revendication 1, caractérisée en ce que les moyens d'étanchéité (6, 7) comprennent un joint d'étanchéité (7) monté sur un support (5) relié au corps de vanne (1) par un soufflet élastique d'étanchéité (6) comprimable dans le sens longitudinal des conduits amont et aval (10, 19).

3. Vanne selon la revendication 1 ou la revendication 2, caractérisée en ce que les moyens d'étanchéité (6, 7) sont disposés dans une cavité annulaire du corps de vanne (1) coaxiale à l'un (19) des conduits amont ou aval (10, 19).

4. Vanne selon l'une quelconque des revendications 2 et 3, caractérisée en ce que des moyens élastiques supplémentaires (17) formant amortisseurs coopèrent avec le support de joint (5) pour appliquer celui-ci contre l'obturateur en position fermée.

5. Vanne selon l'une quelconque des revendications 1 à 4, caractérisée en ce que les moyens de rétraction de joint comprennent un galet (23) associé à chaque poussoir (3) et disposé sur une portée excentrée (25) formant came solidaire des moyens (22) d'entraînement en rotation de l'obturateur, et en ce que le galet (23) coopère avec le poussoir (3) pour empêcher celui-ci de venir en contact avec le support de joint (5) lors de la fermeture de l'obturateur (21).

6. Vanne selon l'une quelconque des revendications 1 à 4, caractérisée en ce que les moyens de rétraction de joint comprennent un galet (23) monté dans chaque poussoir (33) et en ce que la came (26) solidaire des moyens (22) d'entraînement en rotation de l'obturateur vient en prise avec le galet (23) monté sur le poussoir (33) pour empêcher celui-ci de venir en contact avec le support de joint (5) lors de la fermeture de l'obturateur (21).

7. Vanne selon l'une quelconque des revendications 1 à 6, caractérisée en ce que les moyens de rétraction de joint (23, 3 ; 27, 33) sont symétriques par rapport à un plan axial de la vanne perpendiculaire à l'axe de rotation (22) de l'obturateur (21).

8. Vanne selon l'une quelconque des revendications 1 à 6, caractérisée en ce que ledit élément élastique (4) de stockage d'énergie comprend un ensemble de rondelles élastiques comprimées coopérant avec le poussoir (3 ; 33) des moyens de rétraction de joint.

9. Vanne selon l'une quelconque des revendications 1 à 8, caractérisée en ce qu'elle constitue une vanne de régulation du débit de fluide entre le section de conduit amont (10) et la section de conduit aval (19).

## Claims

1. Ball valve, comprising a valve body (1) defining an upstream flow tube (10) and a downstream flow tube (19), a spherical ball (21) with a calibrated opening (20), means (22) for rotatively driving the ball (21) in order to turn it from a closed position to an open position and vice versa, a cam (25 ; 26) fast with means (22) for driving the ball (21) in rotation and sealing means (6, 7) to ensure fluid-tight closure of the valve when the ball (21) is in closed position, said sealing means (6, 7) being mounted in the valve body (1) so as to be able to pass from a retracted position in which said sealing means (6, 7) are spaced from the ball (21) to a contacting position in which said sealing means (6, 7) are in contact with the ball (21) to ensure tightness between the valve body (1) and the ball (21), said sealing means (6, 7) being normally subjected to an action tending to place them in a contacting position with the ball (21), characterized in that it further comprises seal retracting means (23, 3 ; 27, 33) comprising at least one cam follower (3 ; 35) separate from the cam (25, 26) and cooperating with at least one elastic energy storing element (4) in order to be selectively brought in contact with the cam (25 ; 26) and the sealing means (6, 7), and in that when the ball (21) is moved from its opening position to its closing position, the cam (25 ; 26) comes in contact with the seal retracting means (23, 3 ; 27, 33) to move the latter away from the sealing means (6, 7) and to compress the energy storing element (4), and the sealing means (6, 7) come in contact with the ball (21) whereas when said ball (21) is moved from its closing position to its opening position, the cam (25, 26) looses contact with the seal retracting means (3 ; 33) which are moved by the energy storing element (4) to be brought in contact with the sealing means (7) and move the latter from their contacting position with the ball (21) to their non-contacting position with said ball (21).

2. Valve according to claim 1, characterized in that sealing means (6, 7) comprise a sealing ring (7) fitted to a support (5) connected to the valve body (1) by means of an elastic bellows seal (6) which can be compressed in the longitudinal direction of the upstream and downstream flow tubes (10, 19).

3. Valve according to claim 1 or claim 2, characterized in that the sealing means (6, 7) are disposed in an annular cavity in the valve body (1) coaxial with one (19) of said flow tubes (10, 19).

4. Valve according to any one of claims 2 and 3, characterized in that additional spring means (17) acting as dampers cooperate with the seal support (5) to apply the latter against the ball in closed position.

5. Valve according to any one of claims 1 to 4, characterized in that said seal retracting means comprise a cam (23) associated to each follower (3) and disposed on an off-centered journal (25) forming cam attached to the ball rotational drive means (22), and in that the cam (23) cooperates with the cam follower (3) to prevent the latter from coming in contact with the seal support (5) when the valve (21) is closed.

6. Valve according to any one of claims 1 to 4, characterized in that said seal retracting means comprise a cam (23) mounted in each cam follower (33) and in the cam (26) attached to the ball rotational drive means (22) engages the cam (23) mounted on the cam follower (33) to prevent the latter from contacting the seal support (5) when the valve (21) is closed.

7. Valve according to any one of claims 1 to 6, characterized in that said seal retracting means (23, 3 ; 27, 33) are arranged symmetrically with respect to an axial plane of the valve perpendicular to the rotational axis (22) of the ball (21).

8. Valve according to any one of claims 1 to 6, characterized in that said elastic energy-storing means (4) comprise a set of compressed spring washers cooperating with the cam follower (3 ; 33) of the seal retracting means.

9. Valve according to any one of claims 1 to 8, characterized in that it constitutes a control valve for the flow of fluid between the upstream flow tube (10) and the downstream flow tube (19).

## Patentansprüche

1. Ventil mit kugeligem Verschluß, mit einem Ventilkörper (1), der einen stromaufwärtigen Leitungsabschnitt (10) und einen stromabwärtigen Leitungsabschnitt (19) definiert, einem kugeligen Verschluß (21), der eine kalibrierte Öffnung (20) aufweist, Drehmitnahmeeinrichtungen (22) des kugeligen Verschlusses (21), um diesen von einer Schließstellung in eine Öffnungsstellung zu bewegen und umgekehrt, einem Nocken (25 ; 26), der mit den Drehmitnahmeeinrichtungen (22) des Verschlusses (21) verbunden ist, und mit Dichtungseinrichtungen (6, 7), um eine Dichtheit in Schließstellung des Verschlusses (21) sicherzustellen, wobei die Dichtungseinrichtungen (6, 7) in dem Ventilkörper (1) derart angeordnet sind, um von einer zurückgezogenen Stellung, in der die Dichtungseinrichtungen (6, 7) vom kugeligen Verschluß (21) beabstandet sind, in eine Berührungsstellung sich zu bewegen, in der die Dichtungseinrichtungen (6, 7) in Kontakt mit dem Verschluß (21) sind, um eine Dichtheit zwischen dem Ventilkörper (1) und dem Verschluß (21) sicherzustellen, wobei die Dichtungseinrichtungen (6, 7) normalerweise einer Wirkung unterzogen sind, die versucht sie in die Berührungsstellung mit dem Verschluß (21) zu setzen, dadurch gekennzeichnet, daß es weiterhin Einrichtungen (23, 3 ; 27, 33) des Zurückziehens der Verbindung aufweist, die wenigstens einen Drücker (3 ; 35) getrennt von dem Nocken (25, 26) aufweisen und der mit wenigstens einem elastischen Element (4) der Energiespeicherung zusammenwirkt, um wahlweise in Berührung mit dem Nocken (25 ; 26) und den Dichtungseinrichtungen (6, 7) gebracht zu werden, und daß, wenn der Verschluß (21) von seiner Öffnungsstellung in seine Schließstellung versetzt wird, der Nocken (25 ; 26) in Kontakt mit den Einrichtungen zum Zurückziehen der Verbindung (23, 3 ; 27, 33) kommt, um diese von den Dichtungseinrichtungen (6, 7) zu entfernen und das Energiespeicherelement (4) zu komprimieren, und die Dichtungseinrichtungen (6, 7) in Kontakt mit dem Verschluß (21) kommen, während der Verschluß (21) von seiner Schließstellung in seine Öffnungsstellung versetzt wird, wobei der Nocken (25, 26) seinen Kontakt mit den Einrichtungen zum Zurückziehen der Verbindung (3 ; 33) verliert, die durch das Energiespeicherelement (4) bewegt werden, um in Kontakt zu kommen mit den Dichtungseinrichtungen (7) und diese von ihrer Kontaktstellung mit dem Verschluß (21) in ihre Nichtberührungsstellung mit dem Verschluß (21) zu verschieben.

2. Ventil nach Anspruch 1, dadurch gekennzeichnet, daß die Dichtungseinrichtungen (6, 7) eine Dichtungsverbindung (7) aufweist, die auf einem Träger (5) angeordnet ist, der mit dem Ventilkörper (1) durch einen elastischen Dichtungsbalg (6) verbunden ist, der in Längsrichtung der stromaufwärtigen und stromabwärtigen Leitungen (10, 19) komprimierbar ist.

3. Ventil nach Anspruch 1 oder Anspruch 2, dadurch gekennzeichnet, daß die Dichtungseinrichtungen (6, 7) in einem ringförmigen Hohlraum des Ventilkörpers (1) koaxial zu einer (19) der stromaufwärtigen oder stromabwärtigen Leitungen (10, 19) angeordnet sind.

4. Ventil nach einem der Ansprüche 2 oder 3, dadurch gekennzeichnet, daß zusätzliche elastische Einrichtungen (17) Dämpfer bilden, die mit dem Träger der Verbindung (5) zusammenwirken, um diesen gegen den Verschluß in Schließstellung zu drücken.

5. Ventil nach einem der Ansprüche 1 bis 4, dadurch gekennzeichnet, daß die Zurückzieheinrichtungen der Verbindung einen Rollkörper (23) aufweisen, der jedem Drücker (3) zugeordnet und auf einem exzentrischen Lager (25) angeordnet ist, zur Bildung eines mit den Drehmitnahmeeinrichtungen (22) des Verschlusses verbundenen Nockens, und daß der Rollkörper (23) mit dem Drücker (3) zusammenwirkt, um diesen daran zu hindern, in Kontakt mit dem Träger der Verbindung (5) beim Schließen des Verschlusses (21) zu kommen.

6. Ventil nach einem der Ansprüche 1 bis 4, dadurch gekennzeichnet, daß die Zurückzieheinrichtungen der Verbindung einen Rollkörper (23) aufweisen, der in jedem Drücker (33) angeordnet ist, und daß der Nocken (26), der mit den Drehmitnahmeeinrichtungen (22) des Verschlusses verbunden ist, in Eingriff mit dem Rollkörper (23) kommt, der auf dem Drücker (33) angeordnet ist, um diesen daran zu hindern, in Kontakt mit dem Träger der Verbindung (5) beim Schließen des Verschlusses (21) zu kommen.

7. Ventil nach einem der Ansprüche 1 bis 6, dadurch gekennzeichnet, daß die Einrichtungen zum Zurückziehen der Verbindung (23, 3 ; 27, 33) symmetrisch bezüglich einer axialen Ebene des Ventils senkrecht zur Drehachse (22) des Verschlusses (21) angeordnet sind.

8. Ventil nach einem der Ansprüche 1 bis 6, dadurch gekennzeichnet, daß das elastische Energiespeicherelement (4) eine Anordnung von elastischen komprimierten Ringen aufweist, die mit dem Drücker (3 ; 33) der Zurückzieheinrichtungen der Verbindung zusammenwirken.

9. Ventil nach einem der Ansprüche 1 bis 8, dadurch gekennzeichnet, daß es ein Einstellventil der Flüssigkeitsrate zwischen dem stromaufwärtigen Leitungsabschnitt (10) und dem stromabwärtigen Leitungsabschnitt (19) bildet.

Fig-1

Fig.2

Fig.3